# EUROPEAN PATENT APPLICATION

(11) **EP 4 625 900 A1**
(43) Date of publication of application: **01.10.2025**
(21) Application number: 23915747.2
(22) Date of filing: 06.12.2023
(51) Int. Cl.: H04L 25/49

(54) **NONLINEAR COMPENSATION APPARATUS, METHOD AND SYSTEM**

(30) Priority: 09.01.2023 CN 202310037666
(71) Applicant: Huawei Technologies Co., Ltd., Shenzhen, Guangdong 518129 (CN)
(72) Inventor: WANG, Ye, Shenzhen, Guangdong 518129 (CN); LOU, Yannian, Shenzhen, Guangdong 518129 (CN); JIN, Zhengtao, Shenzhen, Guangdong 518129 (CN); WEI, Juan, Shenzhen, Guangdong 518129 (CN); ZHU, Qingming, Shenzhen, Guangdong 518129 (CN)
(74) Representative: Körber, Martin Hans
(86) International application number: PCT/CN2023/136823
(87) International publication number: WO 2024/148989

(57) **Abstract**

This application discloses a non-linear compensation apparatus, method, and system, and relates to the field of communication technologies. The non-linear compensation apparatus includes a frequency mixing module, an optical-to-electrical conversion module, and a processing module. The frequency mixing module is configured to convert a first light beam and a second light beam into two frequency-mixed signals that are mutually reverse signals, and transmit the two frequency-mixed signals to the optical-to-electrical conversion module. The optical-to-electrical conversion module is configured to: convert a first frequency-mixed signal into a first electrical signal that includes a first third-order intermodulation product; and convert a second frequency-mixed signal into a second electrical signal, and transmit the second electrical signal to the processing module. The processing module extracts an even-order intermodulation product from the second electrical signal, and superimposes the even-order intermodulation product on a direct current bias voltage of the optical-to-electrical conversion module. In this way, the optical-to-electrical conversion module generates, in a process of modulating the first electrical signal, a second third-order intermodulation product that is equal in magnitude and opposite in phase to the first third-order intermodulation product, so that a finally output signal does not include an odd-order intermodulation product. In this way, non-linear distortion of the output signal is reduced.

## Description

This application claims priority to Chinese Patent Application No. 202310037666.3, filed with the China National Intellectual Property Administration on January 9, 2023 and entitled "NON-LINEAR COMPENSATION APPARATUS, METHOD, AND SYSTEM", which is incorporated herein by reference in its entirety.

### TECHNICAL FIELD

This application relates to the field of communication technologies, and in particular, to a non-linear compensation apparatus, method, and system.

### BACKGROUND

With rapid development of a 5th generation (5th generation, 5G) communication technology, a band of the 5th generation communication technology is extended to a millimeter wave band. When a signal is transmitted, the signal is processed through beamforming, and common beamforming is electrical-domain beamforming (for example, an output-stage device is a power amplifier). A photodetector is a device that can convert an optical signal into an electrical signal. Compared with electrical-domain beamforming, microwave photonic beamforming using the photodetector as the output-stage device has advantages such as ultra-high bandwidth, a flexible and adjustable band, anti-interference, and easy implementation of full connection of an antenna array. However, as an incident light power increases, a concentration of electrons generated in a depletion region of the photodetector increases. An electric field generated by the electrons is in an opposite direction to an internal electric field in the depletion region, which wakens the internal electric field. Consequently, a movement speed of a photogenerated carrier decreases, and an output current does not linearly increase as the incident light power increases, and instead, a non-linear output current is generated. Therefore, like electrical-domain beamforming, microwave photonic beamforming also has a problem that the output-stage device is non-linearly distorted.

In conventional technologies, a digital predistortion method is usually used for electrical-domain beamforming to resolve the problem that an output-stage device on a digital channel is non-linearly distorted. However, for a hybrid beamforming architecture including digital channels and analog channels, because a quantity of analog channels is much greater than a quantity of digital channels, the digital predistortion method set on the digital channels cannot accurately pre-compensate output-stage devices on the analog channels, and a difference between the output-stage devices on the analog channels also affects digital predistortion.

### SUMMARY

This application provides a non-linear compensation apparatus, method, and system, to reduce in-band and out-of-band distortion of an output signal on each analog channel, and improve linearity of a system.

The technical solutions are as follows.

According to a first aspect, a non-linear compensation apparatus is provided. The non-linear compensation apparatus includes a frequency mixing module, an optical-to-electrical conversion module connected to the frequency mixing module, and a processing module connected to the optical-to-electrical conversion module. The frequency mixing module is configured to perform frequency mixing on a first light beam and a second light beam to obtain a first frequency-mixed signal and a second frequency-mixed signal that are mutually reverse signals. The first light beam is a modulated signal, and the second light beam is an unmodulated signal. The optical-to-electrical conversion module is configured to: convert the first frequency-mixed signal into a first electrical signal; and convert the second frequency-mixed signal into a second electrical signal, and transmit the second electrical signal to the processing module. The first electrical signal includes at least a first odd-order intermodulation product. The processing module is configured to: extract, from the second electrical signal, an even-order intermodulation product that meets a preset requirement; and superimpose the even-order intermodulation product on a direct current bias voltage of the optical-to-electrical conversion module. The optical-to-electrical conversion module is configured to generate a second odd-order intermodulation product in a process of modulating the first electrical signal based on the direct current bias voltage on which the even-order intermodulation product is superimposed, and finally obtain a target modulated signal. The target modulated signal does not include an odd-order intermodulation product, and the second odd-order intermodulation product and the first odd-order intermodulation product are equal in magnitude and opposite in phase.

In a possible implementation of this application, the non-linear compensation apparatus is disposed on an analog channel in a hybrid beamforming architecture.

In the non-linear compensation apparatus provided in this application, the frequency mixing module first performs frequency mixing on the first light beam and the second light beam to obtain the first frequency-mixed signal and the second frequency-mixed signal that are mutually reverse signals. Then, the optical-to-electrical conversion module obtains the first electrical signal and the second electrical signal based on the first frequency-mixed signal and the second frequency-mixed signal. Because the first electrical signal includes the first odd-order intermodulation product, it indicates that non-linear distortion exists in the first electrical signal. Therefore, to reduce non-linear distortion of the target modulated signal finally output by the optical-to-electrical conversion module, the second electrical signal is sent to the processing module. In this way, the processing module may obtain the even-order intermodulation product that meets the preset requirement from the second electrical signal. In addition, the even-order intermodulation product that meets the preset requirement is superimposed on the direct current bias voltage of the optical-to-electrical conversion module. After the even-order intermodulation product is superimposed on the direct current bias voltage of the optical-to-electrical conversion module, the direct current bias voltage of the optical-to-electrical conversion module changes. Therefore, the optical-to-electrical conversion module finally modulates the first electrical signal based on the direct current bias voltage after superimposition, and generates the second odd-order intermodulation product in the modulation process. Because the second odd-order intermodulation product and the first odd-order intermodulation product are equal in magnitude and opposite in phase, the second odd-order intermodulation product and the first odd-order intermodulation product cancel each other out in the process of modulating the first electrical signal. In this way, the finally output target modulated signal does not include the odd-order intermodulation product, and therefore non-linear distortion of the target modulated signal finally output by the optical-to-electrical conversion module is reduced. Therefore, when the apparatus in this application is used on each analog channel in a hybrid beamforming architecture, in-band and out-of-band distortion of an output signal can be reduced, and linearity of a system can be improved.

In a possible implementation of this application, the even-order intermodulation product that meets the preset requirement is an even-order intermodulation product that can obtain the second odd-order intermodulation product.

In a possible implementation of this application, the non-linear compensation apparatus further includes a radio frequency output module connected to a first output end of the optical-to-electrical conversion module. The radio frequency output module is configured to move the target modulated signal output by the optical-to-electrical conversion module through the first output end to a radio frequency carrier, and output the target modulated signal.

After moving the target modulated signal to the radio frequency carrier, the radio frequency output module may send the target modulated signal through a sending module such as an antenna.

**In** a possible implementation of this application, the non-linear compensation apparatus further includes a power amplifier. An input end of the power amplifier is connected to the first output end of the optical-to-electrical conversion module, and an output end of the power amplifier is connected to the radio frequency output module. The power amplifier is configured to amplify the target modulated signal output by the optical-to-electrical conversion module through the first output end, and provide an amplified signal for the radio frequency output module.

The power amplifier may first amplify a signal that needs to be output.

In a possible implementation of this application, the processing module includes a conversion unit and a bias unit. An input end of the conversion unit is connected to a second output end of the optical-to-electrical conversion module, and is configured to extract, from the second electrical signal, the even-order intermodulation product that meets the preset requirement. An output end of the conversion unit is connected to an input end of the bias unit. The bias unit is configured to superimpose the even-order intermodulation product that meets the preset requirement on the direct current bias voltage of the optical-to-electrical conversion module (for example, a first photodetector). In this way, the direct current bias voltage of the optical-to-electrical conversion module may be changed.

In a possible implementation of this application, the conversion unit includes a direct current block and an active filter. An input end of the direct current block is configured to receive the second electrical signal, an output end of the direct current block is connected to an input end of the active filter, and an output end of the active filter is connected to the bias unit. The direct current block is configured to block a direct current product in the second electrical signal to obtain a second target electrical signal. The active filter is configured to obtain, through filtering from the second target electrical signal, the even-order intermodulation product that meets the preset requirement, and provide the even-order intermodulation product that meets the preset requirement for the bias unit.

In this embodiment of this application, a low-frequency analog device such as an active filter or a bias device is used, and a high-speed analog-to-digital converter or digital-to-analog converter is not needed. This reduces costs and is easier to implement.

In a possible implementation of this application, the optical-to-electrical conversion module includes a first photodetector and a second photodetector. Both the first photodetector and the second photodetector are connected to the frequency mixing module, and both the first photodetector and the second photodetector are connected to the processing module. The first photodetector is configured to convert the first frequency-mixed signal into the first electrical signal. The second photodetector is configured to convert the second frequency-mixed signal into the second electrical signal, and transmit the second electrical signal to the processing module. The first photodetector is further configured to generate the second odd-order intermodulation product in the process of modulating the first electrical signal based on the direct current bias voltage on which the even-order intermodulation product is superimposed, and finally obtain the target modulated signal.

In this embodiment of this application, the photodetector is used as an output stage, and has advantages of ultra-large bandwidth, a flexible and adjustable band, anti-interference, and easy implementation of full connection of an antenna array.

In a possible implementation of this application, the non-linear compensation apparatus further includes a direct current bias module. The direct current bias module is configured to provide the direct current bias voltage for the first photodetector and the second photodetector.

In a possible implementation of this application, the frequency mixing module is a 3-dB coupler. The 3-dB coupler has advantages such as low power consumption and a high power capacity.

In a possible implementation of this application, the first light beam is signal light, and the second light beam is local oscillator light.

According to a second aspect, a non-linear compensation method is provided, including: A non-linear compensation apparatus performs frequency mixing on a received first light beam and a received second light beam to obtain a first frequency-mixed signal and a second frequency-mixed signal that are mutually reverse signals. The first light beam is a modulated signal, and the second light beam is an unmodulated signal. The non-linear compensation apparatus obtains a first electrical signal based on the first frequency-mixed signal. The first electrical signal includes a first odd-order intermodulation product. The non-linear compensation apparatus obtains a second electrical signal based on the second frequency-mixed signal. The non-linear compensation apparatus superimposes an even-order intermodulation product that meets a preset requirement in the second electrical signal on a direct current bias voltage. The non-linear compensation apparatus generates a second odd-order intermodulation product in a process of modulating the first electrical signal based on the direct current bias voltage on which the even-order intermodulation product is superimposed, and finally obtains the target modulated signal. The target modulated signal does not include an odd-order intermodulation product, and the second odd-order intermodulation product and the first odd-order intermodulation product are equal in magnitude and opposite in phase.

In a possible implementation of this application, after the target modulated signal is obtained, the method provided in this embodiment of this application further includes: The non-linear compensation apparatus moves the target modulated signal to a radio frequency carrier, and outputs the target modulated signal.

In a possible implementation of this application, that the non-linear compensation apparatus moves the target modulated signal to the radio frequency carrier, and outputs the target modulated signal includes: The non-linear compensation apparatus amplifies the target modulated signal. The non-linear compensation apparatus moves an amplified target modulated signal to the radio frequency carrier, and outputs the amplified target modulated signal.

In a possible implementation of this application, that the non-linear compensation apparatus superimposes the even-order intermodulation product that meets the preset requirement in the second electrical signal on the direct current bias voltage of a first photodetector includes: The non-linear compensation apparatus blocks a direct current product in the second electrical signal to obtain a second target electrical signal. The non-linear compensation apparatus obtains, through filtering from the second target electrical signal, the even-order intermodulation product that meets the preset requirement, and superimposes the even-order intermodulation product that meets the preset requirement on a direct current bias voltage of a first photodetector.

According to a third aspect, a non-linear compensation system is provided. The system includes a signal processor, one digital channel, one or more analog channels, and a sending module. The signal processor is configured to transmit a to-be-transmitted signal to the digital channel, and the digital channel corresponds to the one or more analog channels. Each analog channel has the non-linear compensation apparatus in the foregoing embodiment. Each analog channel receives a first light beam and a second light beam, and sends a target modulated signal through the non-linear compensation apparatus.

It may be understood that, for beneficial effects of the second aspect and the third aspect, refer to related descriptions in the first aspect. Details are not described herein again.

### BRIEF DESCRIPTION OF DRAWINGS

FIG. 1 is a diagram of a working principle of a photodetector according to this application;
FIG. 2 is a curve diagram of a non-linear output according to this application;
FIG. 3 is a diagram of an existing non-linear compensation architecture according to this application;
FIG. 4 is a diagram of a beamforming architecture according to an embodiment of this application;
FIG. 5 is a diagram of a structure of a non-linear compensation apparatus according to an embodiment of this application;
FIG. 6 is a diagram of another structure of a non-linear compensation apparatus according to an embodiment of this application;
FIG. 7 is a diagram of a non-linear output device according to an embodiment of this application;
FIG. 8 is a diagram of a structure of a non-linear compensation apparatus including a direct current bias module according to an embodiment of this application;
FIG. 9 is a diagram of another structure of a non-linear compensation apparatus including a direct current bias module according to an embodiment of this application;
FIG. 10 is a diagram of a structure of a processing module in a non-linear compensation apparatus according to an embodiment of this application;
FIG. 11 is a diagram of another structure of a processing module in a non-linear compensation apparatus according to an embodiment of this application;
FIG. 12 is a diagram of a structure of a conversion unit in a processing module according to an embodiment of this application;
FIG. 13 is a diagram of another structure of a conversion unit in a processing module according to an embodiment of this application;
FIG. 14 is a signal output simulation diagram according to an embodiment of this application;
FIG. 15 is another signal output simulation diagram according to an embodiment of this application; and
FIG. 16 is a schematic flowchart of a non-linear compensation method according to an embodiment of this application.

### DESCRIPTION OF EMBODIMENTS

To clearly describe the technical solutions in embodiments of this application, terms such as "first" and "second" are used in embodiments of this application to distinguish between same items or similar items that provide basically same functions or purposes. For example, a first photodetector and a second photodetector are merely intended to distinguish between different photodetectors, but not to limit a sequence thereof. A person skilled in the art may understand that the terms such as "first" and "second" do not limit a quantity or an execution sequence, and the terms such as "first" and "second" do not indicate a definite difference.

It should be noted that in this application, the terms such as "example" or "for example" is used to represent giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

In this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

Before embodiments of this application are described, related terms in embodiments of this application are first explained as follows:
1. Photodetector: is a device that can convert an optical signal into an electrical signal. The photodetector is usually used in fields such as microwave photonics, optical communication, a lidar, and millimeter wave communication.
2. Non-linear output current: In a photodetector such as a photodiode, an output current does not linearly increase as an input light power increases because a movement speed of a carrier decreases.
3. Beamforming: is also referred to as beamforming and spatial filtering. A parameter of a basic unit of a phase array is adjusted, so that constructive interference is obtained for signals at specific angles, while destructive interference is obtained for signals at other angles.
4. Hybrid beamforming architecture: is beamforming that combines digital beamforming and analog beamforming. That is, partial beamforming is completed by digital processing in a baseband, and partial beamforming is completed by an analog radio frequency beamformer.

Before embodiments of this application are described in detail, application scenarios of embodiments of this application are first described.

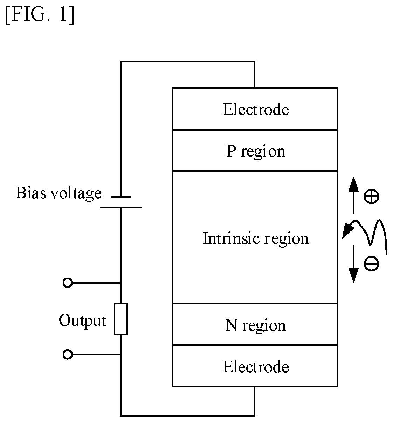

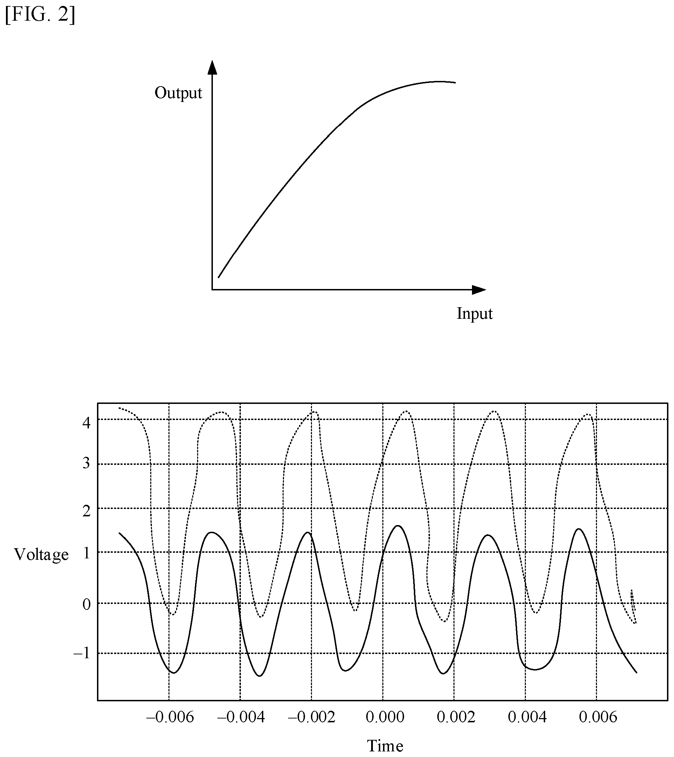

A common photodetector is a PIN diode (positive-intrinsic negative diode, PIN diode). As shown in FIG. 1, a p-type material region and an n-type material region of the PIN diode are intrinsic (i) regions that are slightly doped with n-type materials. When the PIN diode works normally, a bias voltage causes carriers in the intrinsic region to be completely depleted. When energy of an incident photon is greater than or equal to bandgap energy in the intrinsic region, an electron on the valence band in the intrinsic region is excited to absorb the energy of the photon, and an electron-hole pair, that is, a photogenerated carrier, is generated. When the electron-hole pair is separated by a high internal electric field in the intrinsic region, electrons and holes flow to both ends under an action of the bias voltage, and then are collected at boundaries through electrodes to form a current in an external circuit. As an incident light power increases, a concentration of electrons generated in the intrinsic region increases. An electric field generated by photogenerated electrons is in an opposite direction to an internal electric field, which wakens the internal electric field. Consequently, a movement speed of the carrier significantly decreases, and ultimately, an output current does not linearly increase as the input light power increases, that is, a non-linear output current is generated, as shown in FIG. 2.

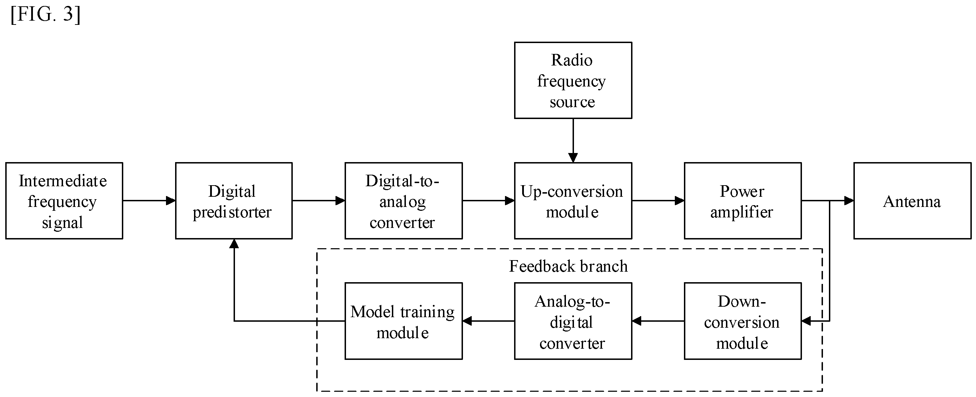

At present, for the non-linear output current, a digital predistortion method is usually used. As shown in FIG. 3, for a power amplifier with non-linear distortion, a transfer function of the power amplifier may be represented as y=f(x). By introducing a feedback branch, a part of an output signal may be converted into a digital intermediate frequency by using a down-conversion module and an analog-to-digital converter. Then, an ideal output and an actual output are compared by using a model training module to continuously perform learning and feedback, and an obtained model parameter is obtained, to approximate an inverse function y=f^(-1)(x) of the transfer function of the power amplifier. Because of y=f(f^(-1)(x))=x, an ideal linear output is obtained after the signal passes through a digital predistorter and the power amplifier. This is a solution in conventional electrical-domain beamforming, that is, the power amplifier is used as output-stage beamforming. However, for hybrid beamforming, the non-linear compensation is only for an output of each digital channel, and a quantity of analog channels is much greater than a quantity of digital channels. Therefore, there is no sufficient degree of freedom to accurately pre-compensate each analog channel.

Therefore, this application proposes a non-linear compensation method, apparatus, and system. In the method, non-linear compensation is performed by modulating a bias voltage of a photodetector, which can compensate third-order non-linearity of the photodetector, and can complete third-order non-linear distortion compensation of an entire link on which the photodetector is located.

The following describes in detail the non-linear compensation apparatus, method, and system provided in embodiments of this application.

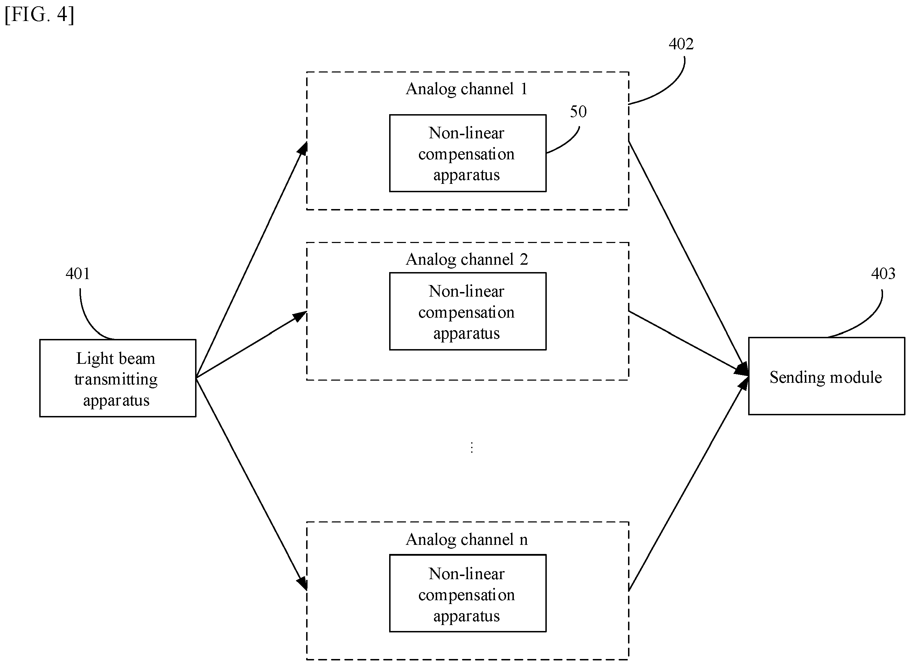

FIG. 4 is a diagram of a hybrid beamforming architecture. As shown in FIG. 4, the architecture includes one or more analog channels 402. Each analog channel 402 is configured to perform frequency mixing to obtain a radio frequency output signal. Each analog channel 402 includes a non-linear compensation apparatus 50 provided in this embodiment of this application.

In a possible embodiment of this application, as shown in FIG. 4, the hybrid beamforming architecture further includes a light beam transmitting apparatus 401, configured to generate and transmit a light beam pair to the one or more analog channels 402 (for example, an analog channel 1 to an analog channel n). There may be one or more light beam pairs. Each light beam pair includes a first light beam (signal light) and a second light beam (local oscillator light), and the first light beam and the second light beam are transmitted by a pair of laser transmitters. For example, the light beam transmitting apparatus 401 includes one or more pairs of laser transmitters. Each pair of laser transmitters transmit one piece of signal light and one piece of local oscillator light to the one or more analog channels 402.

In an example, the light beam transmitting apparatus 401 includes a pair of laser transmitters, that is, a laser transmitter A and a laser transmitter B. The laser transmitter A transmits the signal light to the one or more analog channels 402, and the laser transmitter B transmits the local oscillator light to the one or more analog channels 402 (for example, an analog channel 1 to an analog channel n).

In another example, the light beam transmitting apparatus 401 includes two pairs of laser transmitters, including a laser transmitter A, a laser transmitter B, a laser transmitter C, and a laser transmitter D. The laser transmitter A transmits the signal light, and the laser transmitter B transmits local oscillator light to m analog channels 402 of the plurality of analog channels 402. The laser transmitter C transmits the signal light, and the laser transmitter D transmits the local oscillator light to an analog channel 402 other than the m analog channels 402 of the plurality of analog channels 402.

It should be noted that the signal light is a continuous laser that is transmitted by a laser transmitter and is modulated, and is used to mix with the local oscillator light to generate a microwave signal. The local oscillator light is a continuous laser that is transmitted by a laser transmitter and is not modulated, and is used to mix with the signal light to generate a microwave signal.

In a possible embodiment of this application, as shown in FIG. 4, the hybrid beamforming architecture may further include a sending module 403. The sending module 403 is connected to the one or more analog channels 402. The sending module 403 is configured to send a target modulated signal obtained after processing by the non-linear compensation apparatus 50 on the analog channel 402. For example, the sending module 403 may be an antenna, a transmitter, or the like.

In the following embodiment, an example in which the light beam transmitting apparatus 401 transmits a pair of light beams to the plurality of analog channels 402, and each analog channel 402 includes the non-linear compensation apparatus 50 is used.

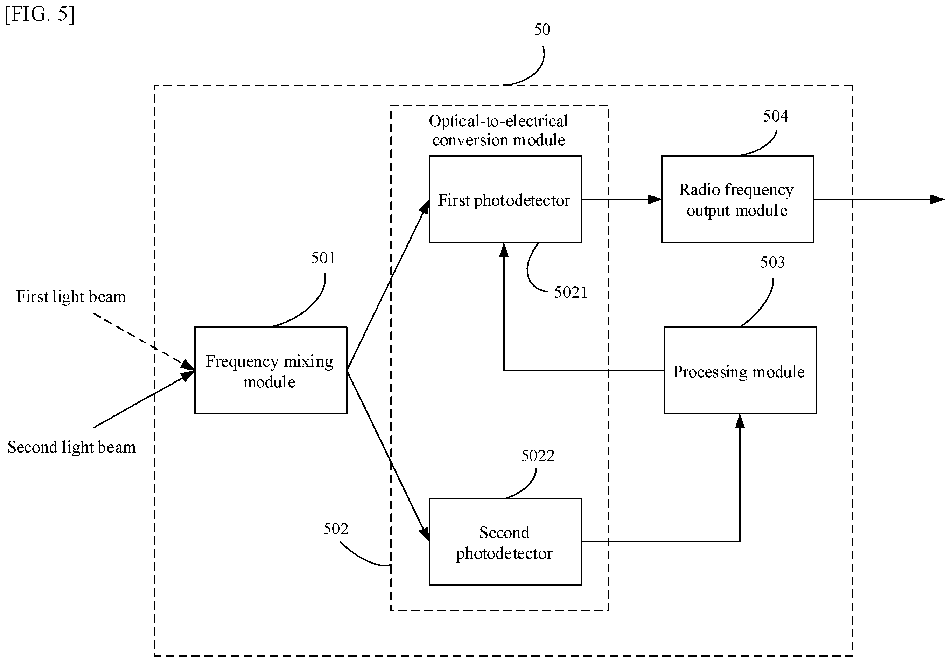

FIG. 5 is a diagram of a structure of a non-linear compensation apparatus according to an embodiment of this application. The non-linear compensation apparatus 50 includes a frequency mixing module 501, an optical-to-electrical conversion module 502 connected to the frequency mixing module 501, and a processing module 503 connected to the optical-to-electrical conversion module 502.

The frequency mixing module 501 is configured to perform frequency mixing on a first light beam and a second light beam to obtain a first frequency-mixed signal and a second frequency-mixed signal that are mutually reverse signals. The first light beam is a modulated signal, and the second light beam is an unmodulated signal.

The optical-to-electrical conversion module 502 is configured to: convert the first frequency-mixed signal into a first electrical signal; and convert the second frequency-mixed signal into a second electrical signal, and transmit the second electrical signal to the processing module 503. The first electrical signal includes at least a first odd-order intermodulation product.

The processing module 503 is configured to: extract, from the second electrical signal, an even-order intermodulation product that meets a preset requirement; and superimpose the even-order intermodulation product on a direct current bias voltage of the optical-to-electrical conversion module 502.

The optical-to-electrical conversion module 502 is configured to generate a second odd-order intermodulation product in a process of modulating the first electrical signal based on the direct current bias voltage on which the even-order intermodulation product is superimposed, and finally obtain a target modulated signal. The target modulated signal does not include the first odd-order intermodulation product. The second odd-order intermodulation product and the first odd-order intermodulation product are equal in magnitude and opposite in phase.

In an embodiment of this application, the first frequency-mixed signal and the second frequency-mixed signal are mutually reverse signals, which may be understood that the first frequency-mixed signal and the second frequency-mixed signal are opposite numbers of each other.

In the non-linear compensation apparatus provided in this application, the frequency mixing module first performs frequency mixing on the first light beam and the second light beam to obtain the first frequency-mixed signal and the second frequency-mixed signal that are mutually reverse signals. Then, the optical-to-electrical conversion module obtains the first electrical signal and the second electrical signal based on the first frequency-mixed signal and the second frequency-mixed signal. Because the first electrical signal includes the first odd-order intermodulation product, it indicates that non-linear distortion exists in the first electrical signal. Therefore, to reduce non-linear distortion of the target modulated signal finally output by the optical-to-electrical conversion module, the second electrical signal is sent to the processing module. In this way, the processing module may obtain the even-order intermodulation product that meets the preset requirement from the second electrical signal. In addition, the even-order intermodulation product that meets the preset requirement is superimposed on the direct current bias voltage of the optical-to-electrical conversion module. After the even-order intermodulation product is superimposed on the direct current bias voltage of the optical-to-electrical conversion module, the direct current bias voltage of the optical-to-electrical conversion module changes. Therefore, the optical-to-electrical conversion module finally modulates the first electrical signal based on the direct current bias voltage after superimposition, and generates the second odd-order intermodulation product in the modulation process. Because the second odd-order intermodulation product and the first odd-order intermodulation product are equal in magnitude and opposite in phase, the second odd-order intermodulation product and the first odd-order intermodulation product cancel each other out in the process of modulating the first electrical signal. In this way, the finally output target modulated signal does not include the odd-order intermodulation product, and therefore non-linear distortion of the target modulated signal finally output by the optical-to-electrical conversion module is reduced. Therefore, when the apparatus in this application is used on each analog channel in a hybrid beamforming architecture, in-band and out-of-band distortion of an output signal can be reduced, and linearity of a system can be improved.

In an embodiment of this application, the frequency mixing module 501 is a three-decibel directional coupler (3-dB coupler), the first light beam is the signal light, and the second light beam is the local oscillator light. The 3-dB coupler is a multiple-input and multiple-output optical coupling device. For example, the 3-dB coupler in this embodiment of this application may be a two-input and two-output 3-dB coupler. That is, the 3-dB coupler has two output ends, namely, a first input end, a second input end, a first output end, and a second output end. Specifically, the first input end of the 3-dB coupler is configured to receive the signal light, and the second input end is configured to receive the local oscillator light. The 3-dB coupler is configured to perform frequency mixing on the signal light and the local oscillator light to obtain two reverse frequency-mixed outputs, that is, the first frequency-mixed signal and the second frequency-mixed signal. The 3-dB coupler outputs the first frequency-mixed signal through the first output end, and outputs the second frequency-mixed signal to the optical-to-electrical conversion module 502 through the second output end. The 3-dB coupler has advantages such as low power consumption and a high power capacity.

Certainly, it may be understood that the frequency mixing module 501 may alternatively use another device that may perform frequency mixing on the first light beam and the second light beam to obtain the first frequency-mixed signal and the second frequency-mixed signal. This is not limited in embodiments of this application.

In a possible embodiment of this application, the electrical signal (that is, the first electrical signal or the second electrical signal) includes a plurality of odd-order intermodulation products and a plurality of even-order intermodulation products. The odd-order intermodulation products that account for a largest proportion in the electrical signal are third-order intermodulation products, and the even-order intermodulation products are second-order intermodulation products. For example, the odd-order intermodulation product may be a third-order intermodulation product, a fifth-order intermodulation product, or the like, and the even-order intermodulation product may be a second-order intermodulation product, a fourth-order intermodulation product, or the like. In the following embodiment, an example in which the odd-order intermodulation product is the third-order intermodulation product and the even-order intermodulation product is the second-order intermodulation product is used.

It may be understood that in the first electrical signal output by the optical-to-electrical conversion module 502, the third-order intermodulation product (a first third-order intermodulation product) is an important parameter of a non-linear output. That is, suppressing the first third-order intermodulation product in the first electrical signal may compensate for the non-linear output.

It may be understood that the optical-to-electrical conversion module 502 in this embodiment of this application has two input ends and two output ends, namely, a first input end, a second input end, a first output end, and a second output end. An input signal received by the first input end of the optical-to-electrical conversion module 502 is the first frequency-mixed signal. It may also be understood that the first input end of the optical-to-electrical conversion module 502 is connected to the first output end of the frequency mixing module 501. An input signal received by the second input end of the optical-to-electrical conversion module 502 is the second frequency-mixed signal. It may also be understood that the second input end of the optical-to-electrical conversion module 502 is connected to the second output end of the frequency mixing module 501. The first output end of the optical-to-electrical conversion module 502 is configured to output the target modulated signal. For example, the first output end may be connected to a following radio frequency output module 504, or connected to a radio frequency output module 504 through a power amplifier 505. The second output end of the optical-to-electrical conversion module 502 is configured to provide the second electrical signal for the processing module 503, that is, the second output end is connected to the processing module 503.

In a possible embodiment of this application, the optical-to-electrical conversion module 502 may include a plurality of optical-to-electrical conversion submodules, for example, a first optical-to-electrical conversion submodule and a second optical-to-electrical conversion submodule. In an example, the optical-to-electrical conversion submodule may be a photodetector. Certainly, the optical-to-electrical conversion submodule may alternatively be another device that can convert a light beam into an electrical signal. As shown in FIG. 5, an example in which the optical-to-electrical conversion module 502 includes a first photodetector 5021 and a second photodetector 5022 is used in FIG. 5. Input ends of the first photodetector 5021 and the second photodetector 5022 are both connected to the frequency mixing module 501. An output end of the first photodetector 5021 is connected to the radio frequency output module 504. An output end of the second photodetector 5022 is connected to the processing module 503. The first photodetector 5021 is configured to convert the first frequency-mixed signal into the first electrical signal. The second photodetector 5022 is configured to convert the second frequency-mixed signal into the second electrical signal, and transmit the second electrical signal to the processing module 503. Correspondingly, the processing module 503 is configured to: extract, from the second electrical signal, the even-order intermodulation product (for example, the second-order intermodulation product) that meets a preset requirement; and superimpose the even-order intermodulation product on the direct current bias voltage of the first photodetector 5021. The first photodetector 5021 is configured to generate a second third-order intermodulation product in a process of modulating the first electrical signal based on the direct current bias voltage on which the even-order intermodulation product is superimposed, and finally obtain the target modulated signal.

It may be understood that when the optical-to-electrical conversion module 502 includes the first photodetector 5021 and the second photodetector 5022, the first input end of the optical-to-electrical conversion module 502 is the input end of the first photodetector 5021. The second input end of the optical-to-electrical conversion module 502 is the input end of the second photodetector 5022. The first output end of the optical-to-electrical conversion module 502 is the output end of the first photodetector 5021. The second output end of the optical-to-electrical conversion module 502 is the output end of the second photodetector 5022.

In an example, as shown in FIG. 5, it is assumed that an input signal (that is, the first frequency-mixed signal) of the first photodetector 5021 is x, where x meets x=cos 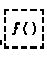 [ω_1 t+cos 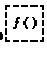 [ω_2 t]], ω_1 and ω_2 represent a first angular frequency and a second angular frequency of the signal, and t represents time. An output signal y (that is, the first electrical signal) of the first photodetector 5021 may be represented as y=a_0+a_1 (cos 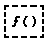 [ω_1 t]+cos 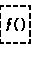 [ω_2 t])+a_2 (cos 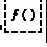 [ω_1 t]+cos 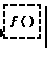 [ω_2 t])^2+a_3 (cos[ω_1 t]+cos[ω_2 t])^3. a_i (i=0, 1, 2, 3...) is a Taylor expansion coefficient of a transmission characteristic curve of the first photodetector 5021 at a working point. In composition of a non-linear product, the even-order intermodulation product is usually far away from a fundamental frequency product in a spectrum, and is easy to be filtered out. However, a power of a high-order odd-order intermodulation product usually is small. Therefore, a low-order third-order intermodulation product becomes an important parameter for suppressing non-linearity. The first third-order intermodulation product may be represented as y_imd3=3a_3 cos 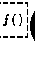 [2ω_1-ω_2)t/4.

Specifically, the first photodetector 5021 is further configured to generate the second third-order intermodulation product in the process of modulating the first electrical signal. Because the second third-order intermodulation product and the first third-order intermodulation product are equal in magnitude and opposite in phase, the second third-order intermodulation product cancels out the first third-order intermodulation product in the first electrical signal in the modulation process, and the target modulated signal that does not include the first third-order intermodulation product can be finally obtained.

It may be understood that an example in which the even-order intermodulation product is the second-order intermodulation product is used, the processing module 503 is configured to obtain, through filtering from the second electrical signal output by the second photodetector 5022, the second-order intermodulation product that meets the preset requirement, and superimpose the second-order intermodulation product that meets the preset requirement on a direct current bias voltage of the first photodetector 5021. The first photodetector 5021 generates the second third-order intermodulation product in the process of modulating the first electrical signal based on the direct current bias voltage on which the second-order intermodulation product that meets the preset requirement is superimposed. The second third-order intermodulation product and the first third-order intermodulation product are equal in magnitude and opposite in phase, so that the first third-order intermodulation product in the first electrical signal is canceled out.

In an example, the second third-order intermodulation product is Δ_imd3, and when Δ_imd3+y_imd3=0, a non-linear output of the first photodetector 5021 is compensated.

In a possible embodiment of this application, the non-linear compensation apparatus 50 further includes the radio frequency output module 504 connected to the first output end of the optical-to-electrical conversion module 502. The radio frequency output module 504 is configured to move the target modulated signal output by the optical-to-electrical conversion module 502 through the first output end to a radio frequency carrier, and output the target modulated signal.

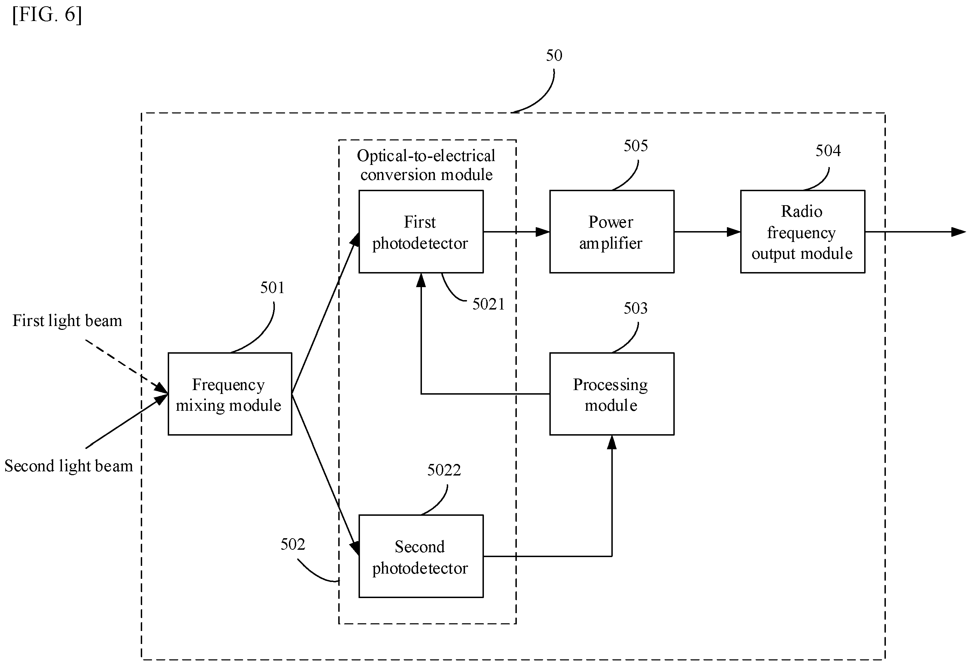

Specifically, as shown in FIG. 5, FIG. 8, FIG. 10, and FIG. 12, the radio frequency output module 504 is connected to the output end of the first photodetector 5021. As shown in diagrams of the non-linear compensation apparatus in FIG. 6, FIG. 9, FIG. 11, and FIG. 13, the radio frequency output module 504 is connected to an output end of the power amplifier 505. The radio frequency output module 504 is configured to move the target modulated signal to the radio frequency carrier, and output the target modulated signal.

Optionally, an output end of the radio frequency output module 504 is connected to the sending module 403 (for example, an antenna). In this way, the radio frequency output module 504 may output the target modulated signal located on the radio frequency carrier to the sending module 403, to send the target modulated signal on the radio frequency carrier by using the sending module 403.

In a possible implementation of this application, to implement a high-power output, as shown in FIG. 6, the non-linear compensation apparatus 50 may further include the power amplifier 505. An input end of the power amplifier 505 is connected to the first output end (for example, the output end of the first photodetector 5021) of the optical-to-electrical conversion module, and the output end of the power amplifier 505 is connected to the radio frequency output module 504. The power amplifier 505 is configured to amplify a signal (for example, the first electrical signal or the target modulated signal) output by the first output end of the optical-to-electrical conversion module, and then provide the signal for the radio frequency output module 504.

It may be understood that the first photodetector 5021 outputs the first electrical signal to the power amplifier 505 to obtain an amplified first electrical signal. Because the power amplifier 505 is also a non-linear output device, the first third-order intermodulation product in the first electrical signal amplified by the power amplifier 505 is jointly determined by the power amplifier 505 and the first photodetector 5021.

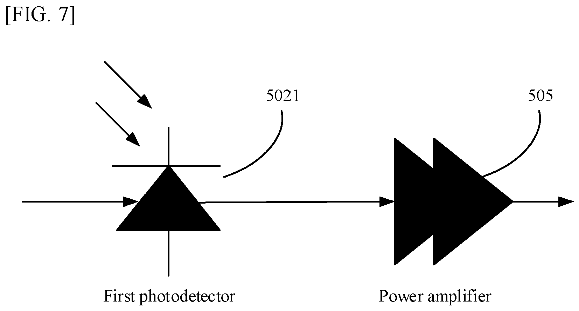

In an example, as shown in FIG. 7, FIG. 7 shows a non-linear generation device. The non-linear generation device includes the first photodetector 5021 and the power amplifier 505. The first electrical signal output by the first photodetector 5021 passes through the power amplifier 505. In this case, a third-order intermodulation product in the amplified first electrical signal output by the power amplifier 505 includes two parts. A first part y_(imd3-PA1) is a fundamental frequency product of the first photodetector 5021 and a third-order intermodulation product of the power amplifier 505, and a second part y_(imd3-PA2) is a third-order intermodulation product of the first photodetector 5021 and a fundamental frequency product of the power amplifier 505, where y_(imd3-PA1)=3a_1^(, 3) b_3/4 and y_(imd3-PA2)=a_3^,b_1. "a_1^," represents the fundamental frequency product of the first photodetector 5021, and "a_3^," represents the third-order intermodulation product of the first photodetector 5021. "a_1^," and "a_3^," are controlled by the processing module 503. When the processing module 503 makes y_(imd3-PA1) and y_(imd3-PA2) equal in magnitude and opposite in phase, the third-order intermodulation product in the amplified first electrical signal output by the power amplifier 505 may be suppressed.

In an embodiment of this application, the non-linear compensation apparatus 50 further includes a direct current bias module 506. The direct current bias module 506 is configured to provide the direct current bias voltage for the first photodetector 5021 and the second photodetector 5022 (that is, the optical-to-electrical conversion module 502).

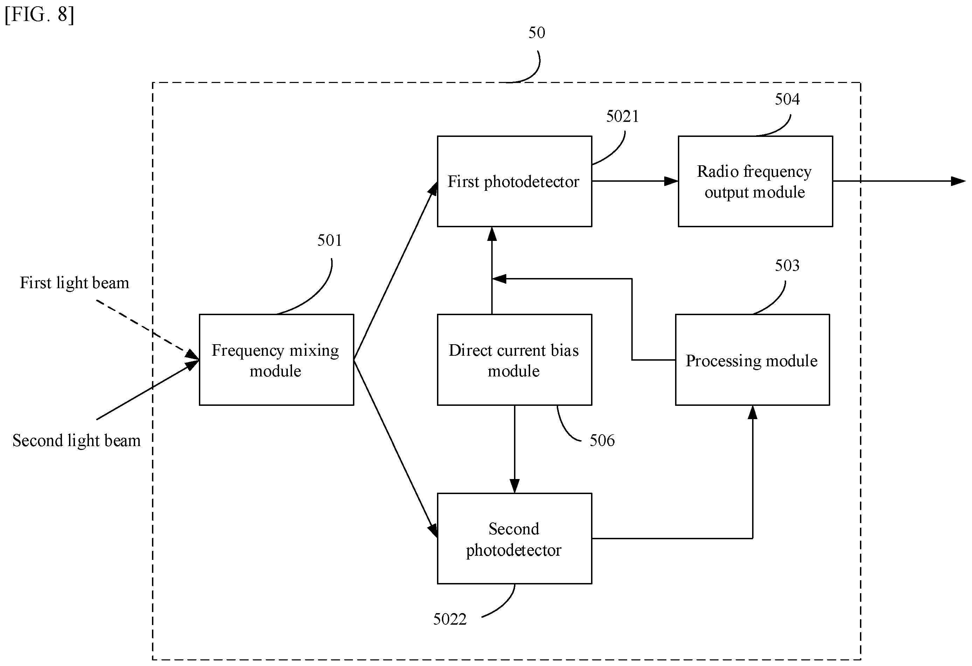

In an example, the non-linear compensation apparatus shown in FIG. 5 is used as an example. As shown in FIG. 8, the direct current bias module 506 is connected to the first photodetector 5021 and the second photodetector 5022. The even-order intermodulation product that meets the preset requirement and that is output by the processing module 503 and the direct current bias voltage output by the direct current bias module 506 jointly act on the first photodetector 5021. It may be understood that the processing module 503 superimposes the even-order intermodulation product that meets the preset requirement on the direct current bias voltage of the first photodetector 5021.

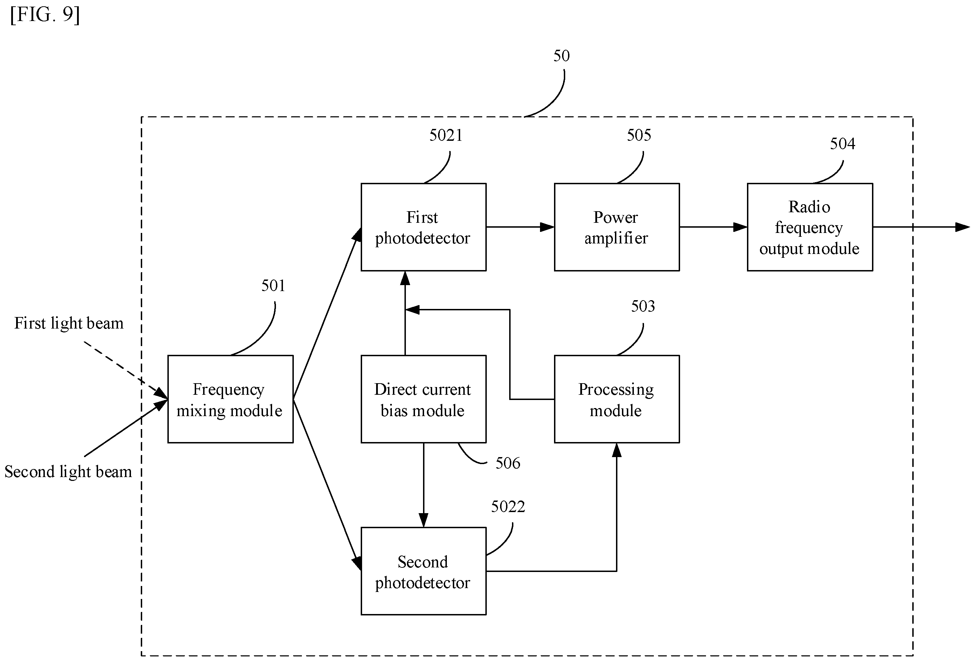

In another example, the non-linear compensation apparatus shown in FIG. 6 is used as an example. As shown in FIG. 9, a connection relationship and a function of the direct current bias module 506 are the same as those in the foregoing example. Details are not described herein again.

It should be noted that there may be one or two direct current bias modules 506. It may be understood that one direct current bias module 506 provides the direct current bias voltages for both the first photodetector 5021 and the second photodetector 5022, or two direct current bias modules 506 may provide direct current bias voltages for the first photodetector 5021 and the second photodetector 5022, respectively.

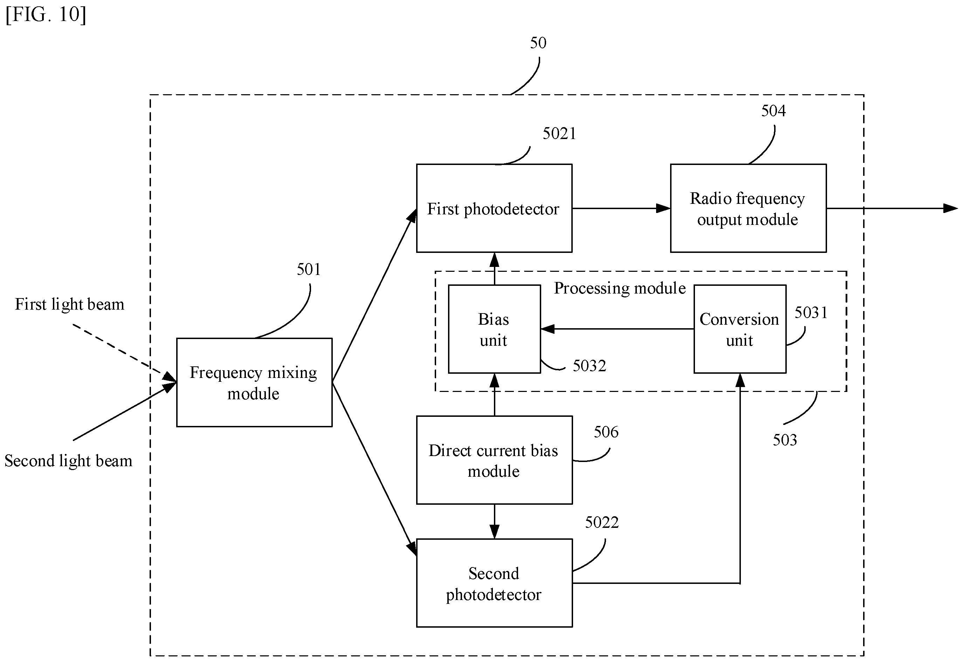

In a possible embodiment of this application, as shown in FIG. 10, the processing module 503 includes a conversion unit 5031 and a bias unit 5032. An input end of the conversion unit 5031 is connected to the second output end (for example, the output end of the second photodetector 5022) of the optical-to-electrical conversion module 502, and is configured to extract, from the second electrical signal, the even-order intermodulation product that meets the preset requirement. The bias unit 5032 is configured to superimpose the even-order intermodulation product that meets the preset requirement on the direct current bias voltage of the first photodetector 5021 in the optical-to-electrical conversion module 502.

In an example, the non-linear compensation apparatus shown in FIG. 8 is used as an example. As shown in FIG. 10, the input end of the conversion unit 5031 is used as an input end of the processing module 503 and is connected to the output end of the second photodetector 5022. An output end of the conversion unit 5031 is connected to an input end of the bias unit 5032. An output end of the bias unit 5032 is used as an output end of the processing module 503 and is connected to the first photodetector 5021.

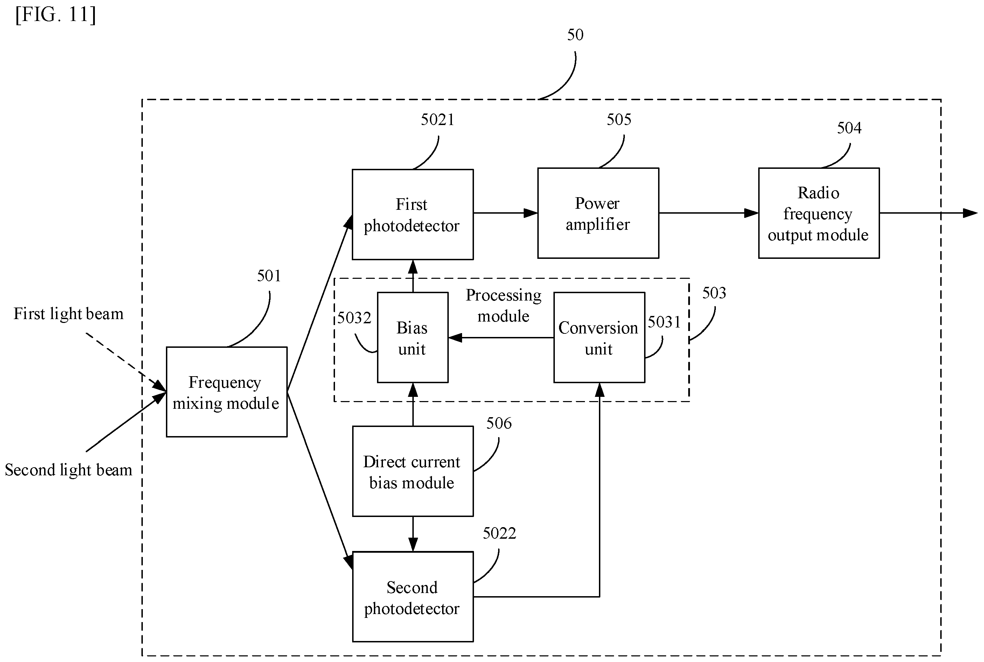

In another example, the non-linear compensation apparatus shown in FIG. 9 is used as an example. As shown in FIG. 11, the output end of the first photodetector 5021 is connected to the power amplifier 505. The processing module 503 is the same as that in the foregoing embodiment. Details are not described herein again.

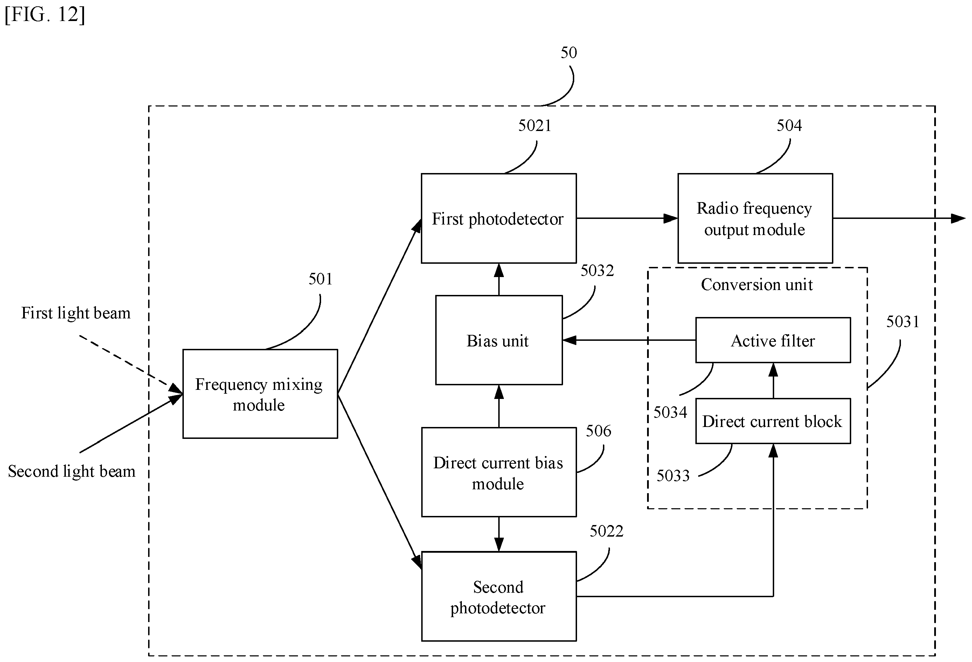

In a possible embodiment of this application, the conversion unit 5031 includes a direct current block 5033 and an active filter 5034, as shown in FIG. 12. An input end of the direct current block 5033 is connected to the second output end of the optical-to-electrical conversion module 502, and is configured to receive the second electrical signal. An output end of the active filter 5034 is connected to the bias unit 5032, and is configured to output the second-order intermodulation product that meets the preset requirement.

Specifically, an output end of the direct current block 5033 is connected to an input end of the active filter 5034. The direct current block 5033 is configured to block a direct current product in the second electrical signal to obtain a second target electrical signal. The active filter 5034 is configured to obtain, through filtering from the second target electrical signal, the even-order intermodulation product that meets the preset requirement, and provide the even-order intermodulation product that meets the preset requirement for the bias unit 5032.

A magnitude of the even-order intermodulation product obtained from the second target electrical signal may be changed by controlling an amplification coefficient of the active filter 5034, to obtain the even-order intermodulation product that meets the preset requirement. In this way, after the even-order intermodulation product that meets the preset requirement is superimposed on the direct current bias voltage, the optical-to-electrical conversion module 502 obtains, in the process of modulating the first electrical signal, the second odd-order intermodulation product that is equal in magnitude and opposite in phase to the first odd-order intermodulation product, to cancel out the first odd-order intermodulation product in the first electrical signal.

In an example, the non-linear compensation apparatus shown in FIG. 12 is used as an example. After passing through the direct current block 5033 and the active filter 5034, an output ỹ of the second photodetector 5022 may be represented as y=ka_2 cos[ω_1-ω_2)t, where k represents the amplification coefficient of the active filter 5034. After ỹ is superposed on the direct current bias voltage output by the direct current bias module 506, the second third-order intermodulation product Δ_imd3 is generated in an output of the first photodetector 5021, and may be represented as Δ_imd3=myy=mk/2·a_1 a_2 cos(2ω_1-ω_2)t+9mk/8·a_2 a_3 cos(2ω_1-ω_2)t, where m represents a modulation coefficient of the bias voltage of the first photodetector 5021. When the second third-order intermodulation product and the first third-order intermodulation product are equal in magnitude and opposite in phase, the amplification coefficient k of the active filter 5034 may be represented as k=-3a_3/(2a_1 a_2+9a_2 a_3/2)m.

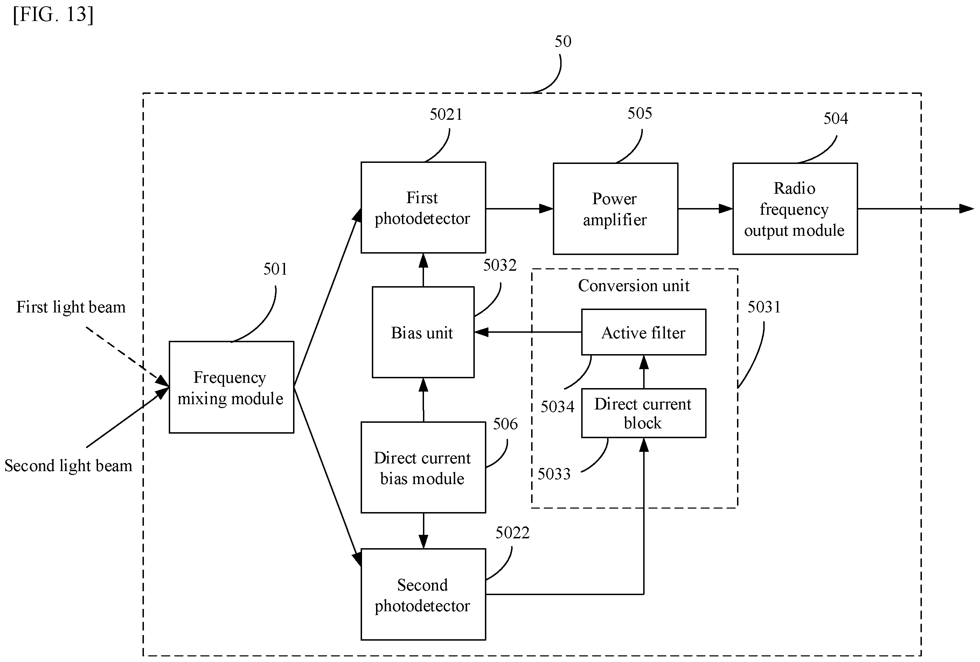

In another possible embodiment of this application, as shown in FIG. 13, the output end of the first photodetector 5021 is connected to the power amplifier 505. The third-order intermodulation product in the amplified first electrical signal output by the power amplifier 505 includes the fundamental frequency product of the first photodetector 5021, the third-order product y_(imd3-PA1) of the power amplifier 505, the third-order product of the first photodetector 5021, and the fundamental frequency product y_(imd3-PA2) of the power amplifier 505, where y_(imd3-PA1)=3a_1^(, 3) b_3/4 and y_(imd3-PA2)=a_3^,b_1. "a_1^," represents the fundamental frequency product of the first photodetector 5021, and "a_3^," represents the third-order intermodulation product of the first photodetector 5021. When there is no second photodetector 5022 or the conversion unit 5031 in the processing module 503, a_1^,=a_1 and a_3^,=3a_3/4. When the second photodetector 5022 sends the second electrical signal to the processing module 503, the second electrical signal is processed by the direct current block 5033 and the active filter 5034, and "a_1^,"←a_1+mk(a_1 a_2/2+3a_2 a_3/2) and "a_3^,"←3a_3/4+mk(a_1 a_2/2+9a_2 a_3/8).

It may be understood that when y_(imd3-PA1) and y_(imd3-PA2) are equal in magnitude and opposite in phase, that is, the amplification coefficient k of the active filter 5034 is adjusted, so that when a_1^(, 3)/a_3^,=-4b_1/3b_3 is true, the third-order intermodulation product in an output of the power amplifier 505 may be suppressed.

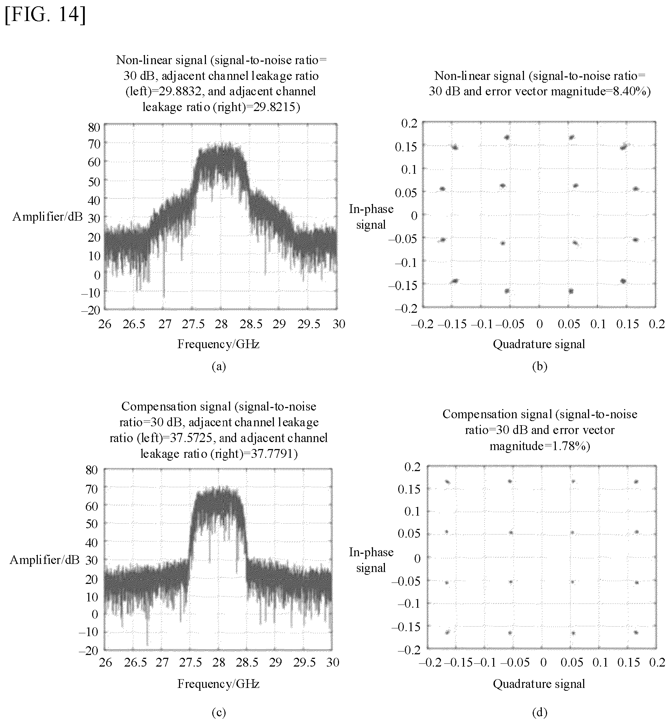

In an embodiment of this application, an example in which the output end of the first photodetector 5021 is connected to the radio frequency output module 504 is used. As shown in FIG. 5, FIG. 8, FIG. 10, and FIG. 12, the amplification coefficient k of the active filter 5034 in the processing module 503 is controlled, so that the third-order intermodulation product in the first electrical signal can be suppressed. Simulation is performed by using a 16-quadrature amplitude modulation signal whose carrier frequency is 28 GHz and bandwidth is 800 MHz. A simulation result is shown in FIG. 14. (a) in FIG. 14 is a diagram of an adjacent channel leakage ratio existing when the non-linear compensation apparatus in this embodiment of this application is not used. (b) in FIG. 14 is a diagram of an error vector magnitude existing when the non-linear compensation apparatus in this embodiment of this application is not used. (c) in FIG. 14 is a diagram of an adjacent channel leakage ratio existing when the non-linear compensation apparatus in this embodiment of this application is used. (d) in FIG. 14 is a diagram of an error vector magnitude existing when the non-linear compensation apparatus in this embodiment of this application is used. It can be learned that when the non-linear compensation apparatus in this embodiment of this application is not used, the adjacent channel leakage ratio (adjacent channel leakage ratio, ACLR) of an output signal is 29.8 dB, and the error vector magnitude (error vector magnitude, EVM) is 8.4%. However, when the non-linear compensation apparatus in this embodiment of this application is used, the adjacent channel leakage ratio is increased to 37.6 dB, and the error vector magnitude (error vector magnitude, EVM) is optimized to 1.78%. This obviously reduces in-band and out-of-band distortion of the output signal, and shows a good non-linear suppression capability.

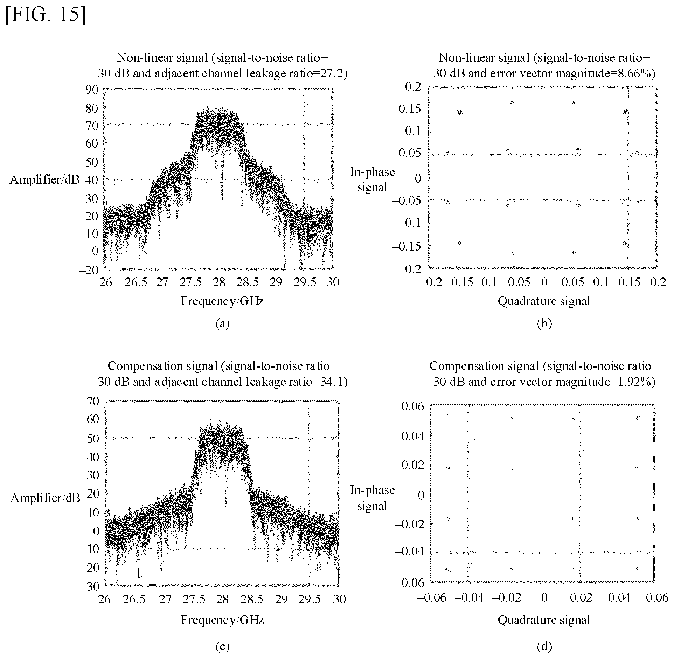

In another embodiment of this application, an example in which the output end of the first photodetector 5021 is connected to the input end of the power amplifier 505, and the output end of the power amplifier 505 is connected to the radio frequency output module 504 is used. As shown in FIG. 6, FIG. 9, FIG. 11, and FIG. 13, the amplification coefficient k of the active filter 5034 in the processing module 503 is controlled, so that the third-order intermodulation product in the first electrical signal can be suppressed. Simulation is also performed by using a 16-quadrature amplitude modulation signal whose carrier frequency is 28 GHz and bandwidth is 800 MHz. A simulation result is shown in FIG. 15. (a) in FIG. 15 is a diagram of an adjacent channel leakage ratio existing when the non-linear compensation apparatus in this embodiment of this application is not used. (b) in FIG. 15 is a diagram of an error vector magnitude existing when the non-linear compensation apparatus in this embodiment of this application is not used. (c) in FIG. 15 is a diagram of an adjacent channel leakage ratio existing when the non-linear compensation apparatus in this embodiment of this application is used. (d) in FIG. 15 is a diagram of an error vector magnitude existing when the non-linear compensation apparatus in this embodiment of this application is used. It can be learned that when the non-linear compensation apparatus in this embodiment of this application is not used, the adjacent channel leakage ratio (adjacent channel leakage ratio, ACLR) of an output signal is 27.2 dB, and the error vector magnitude (error vector magnitude, EVM) is 8.66%. However, when the non-linear compensation apparatus in this embodiment of this application is used, the adjacent channel leakage ratio (adjacent channel leakage ratio, ACLR) is increased to 34.1 dB, and the error vector magnitude (error vector magnitude, EVM) is optimized to 1.92%. This also obviously reduces in-band and out-of-band distortion of the output signal, and shows a good non-linear suppression capability.

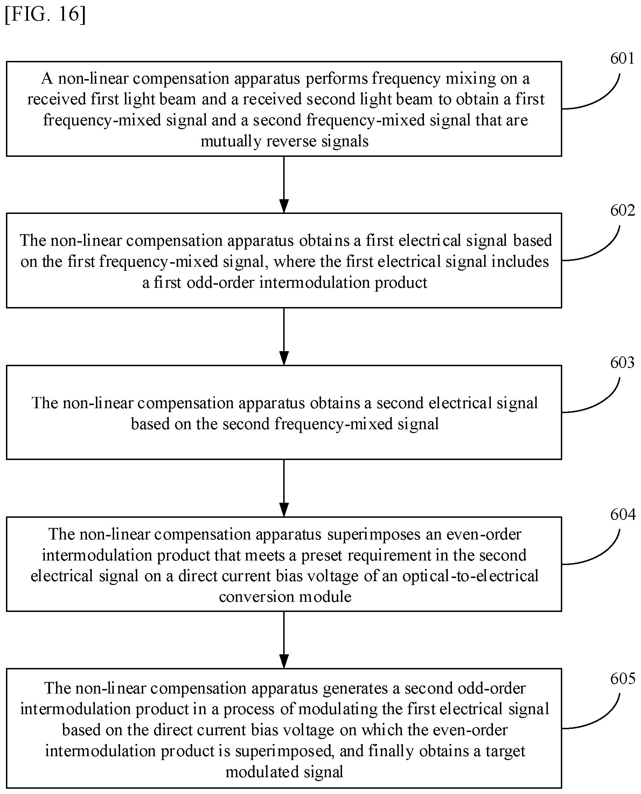

FIG. 16 is a schematic flowchart of a non-linear compensation method according to an embodiment of this application. The method is applied to a hybrid beamforming architecture. The hybrid beamforming architecture includes one or more analog channels 402, and each analog channel 402 includes a non-linear compensation apparatus 50.

An example in which an odd-order intermodulation product is a third-order intermodulation product, and an even-order intermodulation product is a second-order intermodulation product is used. As shown in FIG. 16, the non-linear compensation method provided in this embodiment of this application includes the following steps.

Step 601: The non-linear compensation apparatus 50 performs frequency mixing on a received first light beam and a received second light beam to obtain a first frequency-mixed signal and a second frequency-mixed signal that are mutually reverse signals, where the first light beam is a modulated signal, and the second light beam is an unmodulated signal.

For example, step 601 may be specifically performed by the frequency mixing module 501.

Step 602: The non-linear compensation apparatus 50 obtains a first electrical signal based on the first frequency-mixed signal, where the first electrical signal includes a first odd-order intermodulation product.

Step 603: The non-linear compensation apparatus 50 obtains a second electrical signal based on the second frequency-mixed signal.

For example, step 602 and step 603 may be specifically performed by the optical-to-electrical conversion module 502. When the optical-to-electrical conversion module 502 includes a first photodetector 5021 and a second photodetector 5022, step 602 is performed by the first photodetector 5021, and step 603 is performed by the second photodetector 5022.

Step 604: The non-linear compensation apparatus 50 superimposes an even-order intermodulation product that meets a preset requirement in the second electrical signal on a direct current bias voltage of an optical-to-electrical conversion module.

For example, step 604 may be performed by the processing module 503. When different direct current bias voltage units provide direct current bias voltages for the first photodetector 5021 and the second photodetector 5022, the processing module 503 is configured to superimpose the even-order intermodulation product that meets the preset requirement on the direct current bias voltage of the first photodetector 5021.

Step 605: The non-linear compensation apparatus 50 generates a second odd-order intermodulation product in a process of modulating the first electrical signal based on the direct current bias voltage on which the even-order intermodulation product is superimposed, and finally obtains a target modulated signal.

The target modulated signal does not include the odd-order intermodulation product. The second odd-order intermodulation product and the first odd-order intermodulation product are equal in magnitude and opposite in phase.

For example, step 605 may be performed by the optical-to-electrical conversion module 502. More specifically, the step may be performed by the first photodetector 5021 in the optical-to-electrical conversion module 502.

In a possible embodiment of this application, after step 605, the method provided in this embodiment of this application may further include: The non-linear compensation apparatus 50 moves the target modulated signal to a radio frequency carrier, and outputs the target modulated signal. For example, the optical-to-electrical conversion module 502 outputs the target modulated signal to a radio frequency output module 504, and the radio frequency output module 504 moves the target modulated signal to the radio frequency carrier, and outputs the target modulated signal to a sending module.

In a possible embodiment of this application, that the non-linear compensation apparatus 50 moves the target modulated signal to the radio frequency carrier and outputs the target modulated signal may be specifically implemented in the following manner: The non-linear compensation apparatus 50 amplifies the target modulated signal; and the non-linear compensation apparatus 50 moves an amplified target modulated signal to the radio frequency carrier, and outputs the amplified target modulated signal. For example, the optical-to-electrical conversion module 502 outputs the target modulated signal to the power amplifier 505. The power amplifier 505 amplifies a power of the target modulated signal and outputs a target modulated signal after power amplification to the radio frequency output module 504. The radio frequency output module 504 moves the target modulated signal after power amplification to the radio frequency carrier, and outputs the target modulated signal after power amplification to the sending module.

In a possible implementation of this application, that the non-linear compensation apparatus 50 superimposes the even-order intermodulation product that meets the requirement in the second electrical signal on the direct current bias voltage of the first photodetector includes: The non-linear compensation apparatus 50 blocks a direct current product in the second electrical signal to obtain a second target electrical signal; and the non-linear compensation apparatus 50 obtains, through filtering from the second target electrical signal, the even-order intermodulation product that meets the preset requirement, and superimposes the even-order intermodulation product that meets the preset requirement on a direct current bias voltage of a first photodetector. For example, the non-linear compensation apparatus 50 blocks the direct current product in the second electrical signal by using an isolator, to obtain the second target electrical signal. The non-linear compensation apparatus 50 obtains, through filtering from the second target electrical signal by using an active filter, the even-order intermodulation product that meets the preset requirement, and superimposes the even-order intermodulation product that meets the preset requirement on the direct current bias voltage of the first photodetector.

An embodiment of this application provides a non-linear compensation system. The system includes a signal processor, one digital channel, one or more analog channels, and a sending module. The signal processor is configured to transmit a signal to the digital channel, and the digital channel corresponds to the one or more analog channels. Each analog channel has the non-linear compensation apparatus in the foregoing embodiment. Each analog channel receives a first light beam and a second light beam, and sends a target modulated signal through the non-linear compensation apparatus.

In the foregoing embodiments, descriptions of embodiments have respective focuses. For a part that is not described in detail or recorded in an embodiment, refer to related descriptions in other embodiments.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In embodiments provided in this application, it should be understood that the disclosed apparatus/computer device and method may be implemented in other manners. For example, the described apparatus/computer device embodiments are merely examples. For example, division into the modules or units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The foregoing embodiments are merely intended to describe the technical solutions of this application, but are not to limit this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of embodiments of this application, and these modifications and replacements shall fall within the protection scope of this application.

## Claims

1. A non-linear compensation apparatus, wherein the non-linear compensation apparatus comprises a frequency mixing module, an optical-to-electrical conversion module connected to the frequency mixing module, and a processing module connected to the optical-to-electrical conversion module;
the frequency mixing module is configured to perform frequency mixing on a first light beam and a second light beam to obtain a first frequency-mixed signal and a second frequency-mixed signal that are mutually reverse signals, wherein the first light beam is a modulated signal, and the second light beam is an unmodulated signal;
the optical-to-electrical conversion module is configured to: convert the first frequency-mixed signal into a first electrical signal; and convert the second frequency-mixed signal into a second electrical signal, and transmit the second electrical signal to the processing module, wherein the first electrical signal comprises at least a first odd-order intermodulation product;
the processing module is configured to: extract, from the second electrical signal, an even-order intermodulation product that meets a preset requirement; and superimpose the even-order intermodulation product on a direct current bias voltage of the optical-to-electrical conversion module; and
the optical-to-electrical conversion module is configured to generate a second odd-order intermodulation product in a process of modulating the first electrical signal based on the direct current bias voltage on which the even-order intermodulation product is superimposed, and obtain a target modulated signal, wherein the target modulated signal does not comprise an odd-order intermodulation product, and the second odd-order intermodulation product and the first odd-order intermodulation product are equal in magnitude and opposite in phase.

2. The non-linear compensation apparatus according to claim 1, wherein the non-linear compensation apparatus further comprises a radio frequency output module connected to a first output end of the optical-to-electrical conversion module, and the radio frequency output module is configured to move the target modulated signal output by the optical-to-electrical conversion module through the first output end to a radio frequency carrier, and output the target modulated signal.

3. The non-linear compensation apparatus according to claim 2, wherein the non-linear compensation apparatus further comprises a power amplifier;
an input end of the power amplifier is connected to the first output end of the optical-to-electrical conversion module, and an output end of the power amplifier is connected to the radio frequency output module; and
the power amplifier is configured to amplify the target modulated signal output by the optical-to-electrical conversion module through the first output end, and provide an amplified signal for the radio frequency output module.

4. The non-linear compensation apparatus according to any one of claims 1 to 3, wherein the processing module comprises a conversion unit and a bias unit;
an input end of the conversion unit is connected to a second output end of the optical-to-electrical conversion module, and is configured to extract, from the second electrical signal, the even-order intermodulation product that meets the preset requirement, and an output end of the conversion unit is connected to an input end of the bias unit; and
the bias unit is configured to superimpose the even-order intermodulation product that meets the preset requirement on the direct current bias voltage of the optical-to-electrical conversion module.

5. The non-linear compensation apparatus according to claim 4, wherein the conversion unit comprises a direct current block and an active filter;
an input end of the direct current block is configured to receive the second electrical signal, an output end of the direct current block is connected to an input end of the active filter, and an output end of the active filter is connected to the bias unit;
the direct current block is configured to block a direct current product in the second electrical signal to obtain a second target electrical signal; and
the active filter is configured to obtain, through filtering from the second target electrical signal, the even-order intermodulation product that meets the preset requirement, and provide the even-order intermodulation product that meets the preset requirement for the bias unit.

6. The non-linear compensation apparatus according to any one of claims 1 to 5, wherein the optical-to-electrical conversion module comprises a first photodetector and a second photodetector, both the first photodetector and the second photodetector are connected to the frequency mixing module, and both the first photodetector and the second photodetector are connected to the processing module;
the first photodetector is configured to convert the first frequency-mixed signal into the first electrical signal, and the second photodetector is configured to convert the second frequency-mixed signal into the second electrical signal, and transmit the second electrical signal to the processing module; and
the first photodetector is further configured to generate the second odd-order intermodulation product in the process of modulating the first electrical signal based on the direct current bias voltage on which the even-order intermodulation product is superimposed, and obtain the target modulated signal.

7. The non-linear compensation apparatus according to claim 6, wherein the non-linear compensation apparatus further comprises a direct current bias module; and
the direct current bias module is configured to provide the direct current bias voltage for the first photodetector and the second photodetector.

8. The non-linear compensation apparatus according to any one of claims 1 to 7, wherein the frequency mixing module is a 3-dB coupler.

9. The non-linear compensation apparatus according to any one of claims 1 to 8, wherein the first light beam is signal light, and the second light beam is local oscillator light.

10. A non-linear compensation method, wherein the method comprises:
performing frequency mixing on a received first light beam and a received second light beam to obtain a first frequency-mixed signal and a second frequency-mixed signal that are mutually reverse signals, wherein the first light beam is a modulated signal, and the second light beam is an unmodulated signal; obtaining a first electrical signal based on the first frequency-mixed signal, wherein the first electrical signal comprises a first odd-order intermodulation product;
obtaining a second electrical signal based on the second frequency-mixed signal; superimposing an even-order intermodulation product that meets a preset requirement in the second electrical signal on a direct current bias voltage of an optical-to-electrical conversion module; and
generating a second odd-order intermodulation product in a process of modulating the first electrical signal based on the direct current bias voltage on which the even-order intermodulation product is superimposed, and obtaining a target modulated signal, wherein the target modulated signal does not comprise an odd-order intermodulation product, and the second odd-order intermodulation product and the first odd-order intermodulation product are equal in magnitude and opposite in phase.

11. The non-linear compensation method according to claim 10, wherein after obtaining the target modulated signal, the method further comprises:
moving the target modulated signal to a radio frequency carrier, and outputting the target modulated signal.

12. The non-linear compensation method according to claim 11, wherein moving the target modulated signal to the radio frequency carrier, and outputting the target modulated signal comprise:
amplifying the target modulated signal; and
moving an amplified target modulated signal to the radio frequency carrier, and outputting the amplified target modulated signal.

13. The non-linear compensation method according to any one of claims 10 to 12, wherein superimposing the even-order intermodulation product that meets the preset requirement in the second electrical signal on the direct current bias voltage of the first photodetector comprises:
blocking a direct current product in the second electrical signal to obtain a second target electrical signal; and
obtaining, through filtering from the second target electrical signal, the even-order intermodulation product that meets the preset requirement, and superimposing the even-order intermodulation product that meets the preset requirement on the direct current bias voltage of the first photodetector detector.

14. A non-linear compensation system, wherein the system comprises a signal processor, one digital channel, one or more analog channels, and a sending module;
the signal processor is configured to transmit a signal to the digital channel, and the digital channel corresponds to the one or more analog channels; and
each analog channel has the non-linear compensation apparatus according to any one of claims 1 to 9.
